# EUROPEAN PATENT SPECIFICATION

(11) **EP 4 369 167 B1**
(45) Date of publication and mention of the grant of the patent: **12.11.2025**
(21) Application number: 22856109.8
(22) Date of filing: 05.08.2022
(51) Int. Cl.: G06F 3/0488, G06F 3/0481, G06F 3/04842, G06F 3/04845, G06F 9/451

(54) **METHOD AND DEVICE FOR MOVING APPLICATION BY USING HANDLE PART**
VERFAHREN UND VORRICHTUNG ZUR BEWEGUNG EINER ANWENDUNG UNTER VERWENDUNG EINES GRIFFTEILS
PROCÉDÉ ET DISPOSITIF POUR DÉPLACER UNE APPLICATION EN UTILISANT UNE PARTIE DE POIGNÉE

(30) Priority: 10.08.2021 KR 20210105492
(43) Date of publication of application: 15.05.2024
(73) Proprietor: Samsung Electronics Co., Ltd., Suwon-si, Gyeonggi-do 16677 (KR)
(72) Inventor: LEE, Juhyun, Suwon-si Gyeonggi-do 16677 (KR); KIM, Sunghee, Suwon-si Gyeonggi-do 16677 (KR); KIM, Hyoyeon, Suwon-si Gyeonggi-do 16677 (KR); JUNG, Byungseok, Suwon-si Gyeonggi-do 16677 (KR); CHO, Junhee, Suwon-si Gyeonggi-do 16677 (KR); KIM, Sangheon, Suwon-si Gyeonggi-do 16677 (KR); JEONG, Hyesoon, Suwon-si Gyeonggi-do 16677 (KR); LIM, Yeunwook, Suwon-si Gyeonggi-do 16677 (KR)
(74) Representative: Appleyard Lees IP LLP
(86) International application number: PCT/KR2022/011621
(87) International publication number: WO 2023/018110

(56) References cited:
- JP-A- 2014 130 450
- KR-A- 20100 093 689
- KR-B1- 101 176 657
- KR-B1- 101 991 493
- US-A1- 2004 178 994
- US-A1- 2011 074 698
- US-A1- 2020 326 839

## Description

### Technical Field

The following disclosure relates to a movement of an application using a handle portion.

### Background Art

An electronic device may control a window of an application in response to manipulation on a handle portion. The difficulty of touching the handle portion by a user may vary depending on a visualized size (e.g., a size of graphical representation) and a touchable region of the handle portion of the application.

US2020326839 discloses that when an input by a contact is detected on a drag handle of a window, and the input includes movement of the contact toward a side edge of the display, the window is moved according to the input.

US2011074698 discloses a handle activation region that is used to move objects by input. This handle activation region can be resized according to the available display space.

### Disclosure of the Invention

### Technical Goals

When it is difficult to touch a handle portion, a user may fail to move a window (e.g., a pop-up window) of an application.

For the same size and region of the handle portion in a pop-up view, a failure rate of an interaction may vary by user. In addition, when each user customizes a size and a position of the handle portion, an application creator needs to design a user interface in consideration of a position to be customized, which may increase the difficulty of creating the application.

The electronic device according to an embodiment may assist in touching a handle of a pop-up view and assist in moving a window.

The electronic device according to an embodiment may variably set a visualized size and a touchable region of the handle based on user experience.

The electronic device according to an embodiment may solve a problem of an interaction, which includes a gesture input in an edge region as well as the problem regarding the handle. Technical Solutions

An electronic device according to an embodiment includes a display, a memory storing computer-executable instructions, and a processor configured to execute the instructions by accessing the memory. The instructions are configured to monitor a user input related to a movement of a window object in regions related to a handle portion of a window object output to the display, in response to a case where a first input is detected in an input region for the handle portion, determine an input failure for the movement of the window object based on comparison between the first input and a second input before the first input, and when the input failure is accumulated for the window object, adjust the input region for the handle portion.

A method to be implemented by a processor according to an embodiment includes monitoring a user input related to a movement of a window object in regions related to a handle portion of a window object output to the display, in response to a case where a first input is detected in an input region for the handle portion, determining an input failure for the movement of the window object based on comparison between the first input and a second input before the first input, and when the input failures are accumulated for the window object, adjusting the input region for the handle portion.

### Effects

The electronic device according to an embodiment may set a touchable region for a handle according to failure experience of a user, thereby improving touch accuracy and user experience.

The electronic device according to an embodiment may reduce a failure rate of a movement of a pop-up window using the handle through the improvement of touch accuracy described above.

The electronic device according to an embodiment may variably set a visualized size and a touchable region of the handle based on the user experience, thereby increasing the touch accuracy.

The electronic device according to an embodiment may adjust a region for a gesture input in an edge region of a display screen, thereby improving accuracy of the gesture input.

### Brief Description of Drawings

FIG. 1 is a block diagram illustrating an electronic device in a network environment according to an embodiment.
FIG. 2 illustrates is a view of layers of an electronic device according to an embodiment.
FIG. 3 illustrates a movement of a window object having a handle portion based on a user input according to an embodiment.
FIG. 4 is a flowchart illustrating a method of operating an electronic device for adjusting an input region according to a movement failure of a window object according to an embodiment.
FIG. 5 illustrates an example of a configuration of a window object according to an embodiment.
FIG. 6 is a flowchart illustrating an operation method according to a user input detected in regions related to a handle portion of a window object according to an embodiment.
FIG. 7 illustrates an example of an input region and a detectable region for a handle portion according to an embodiment.
FIG. 8 is a flowchart illustrating an operation of determining an input failure according to an embodiment.
FIGS. 9 and 10 are diagrams illustrating determination of an input failure based on detection time points according to an embodiment.
FIG. 11 is a diagram illustrating determination of an input failure based on detection positions according to an embodiment.
FIG. 12 is a flowchart illustrating an adjustment operation of an input region according to an embodiment.
FIG. 13 is a diagram illustrating adjustment of an input region according to an embodiment.
FIG. 14 is a diagram illustrating a screen hiding operation according to a movement of a window object of an application according to an embodiment.
FIG. 15 is a diagram illustrating a minimization operation of a window object according to an embodiment.
FIG. 16 is a diagram illustrating adjustment of a swipe region according to an embodiment.
FIG. 17 is a diagram illustrating adjustment of a region for setting a divider line according to an embodiment.

### Best Mode for Carrying Out the Invention

Hereinafter, embodiments will be described in detail with reference to the accompanying drawings. When describing the embodiments with reference to the accompanying drawings, like reference numerals refer to like components and a repeated description related thereto will be omitted.

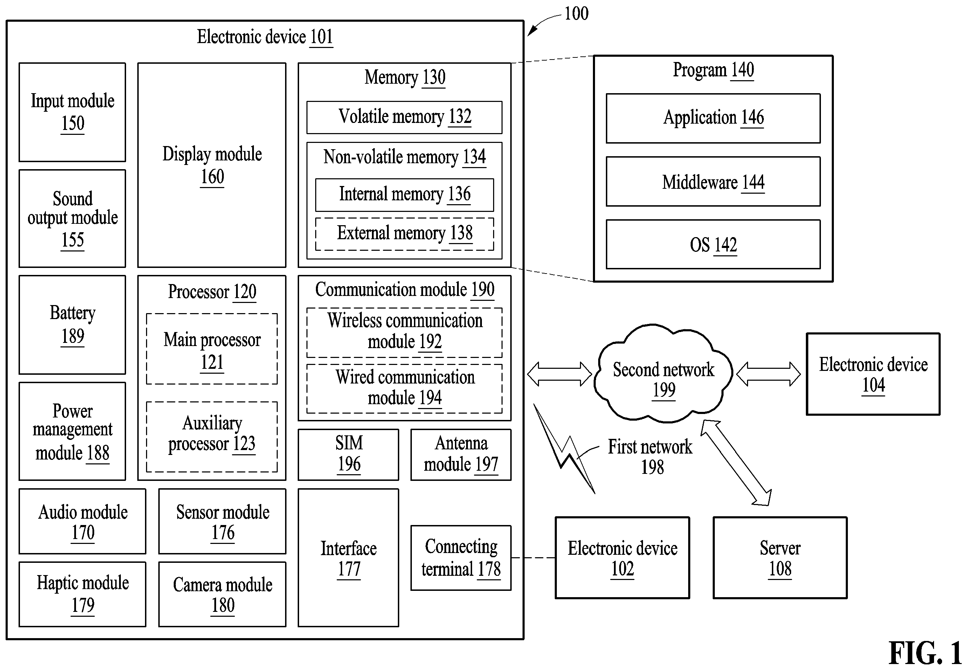

FIG. 1 is a block diagram illustrating an electronic device 101 in a network environment 100 according to an embodiment. Referring to FIG. 1, the electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and an antenna module 197. In some embodiments, at least one (e.g., the connecting terminal 178) of the above components may be omitted from the electronic device 101, or one or more other components may be added in the electronic device 101. In some examples, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An Al model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The Al model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The Al model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, the hologram device, or the projector. According to an embodiment, the display module 160 may include a touch sensor adapted to sense a touch, or a pressure sensor adapted to measure an intensity of a force incurred by the touch. The display module 160 may be implemented with, for example, a foldable structure and/or a rollable structure. For example, a size of a display screen of the display module 160 may be reduced when folded and expanded when unfolded.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a portion of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a portion of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or loT-related technology.

The electronic device according to an embodiment disclosed herein may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1^{st}," and "2^{nd}," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

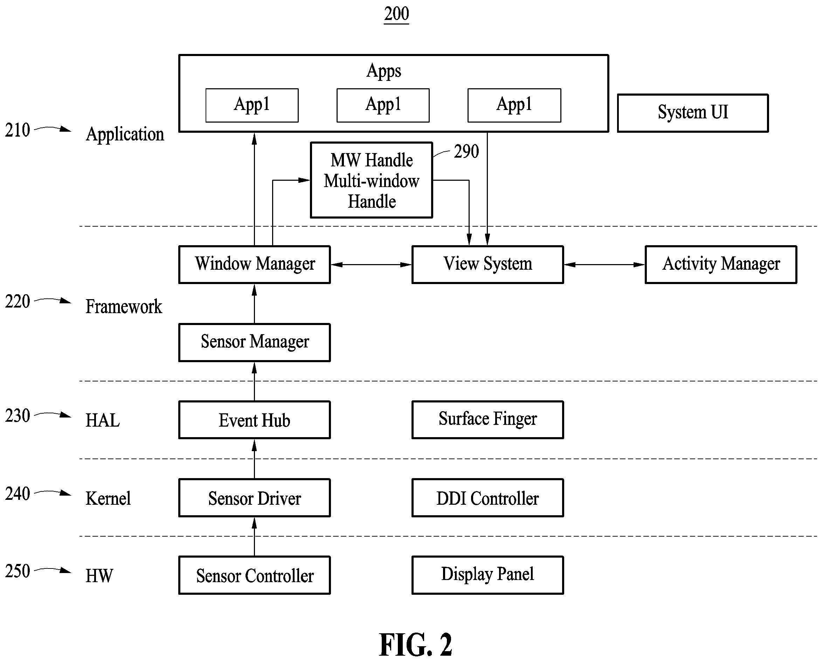

FIG. 2 illustrates is a view of layers of an electronic device according to an embodiment.

An electronic device 200 (e.g., the electronic device 101 of FIG. 1) according to an embodiment may include an application layer 210, a framework layer 220, a hardware abstraction layer (HAL) 230, a kernel layer 240, and a hardware layer 250. However, the illustrated structure is merely a portion of an embodiment, and at least a portion of the illustrated configuration may be changed according to a platform of the electronic device 200.

The application layer 210 may include at least one application and a system user interface (UI). The application may draw at least one layer based on a resolution of a display screen of a display. The application may draw at least one layer based on a resolution of a display area of a display, using a drawing library (e.g., a view). According to an embodiment, the type of the application may not be limited to a telephone application, an Internet browser, a video application, or a game application. The system UI may refer to an application that includes several graphical user interface (GUI) screens implemented on a system of an electronic device, such as a notification bar or a quick view.

The framework layer 220 may include a window manager, a view system, an activity manager, and a sensor manager. The framework layer 220 may provide various functions to the application such that a function or information provided from one or more resources of the electronic device may be used by the application. The window manager, for example, may manage one or more GUI resources that are used on a screen of the electronic device. For example, when a change in a state of the electronic device 200 (e.g., screen extension due to unfolding or screen reduction due to folding) is identified through a sensor module, the window manager may transmit information of a display screen corresponding to the changed state of the electronic device 200 to an application. For example, when the change in the state of the electronic device 200 is identified, the information of the display screen corresponding to the changed state of the electronic device 200 may be transmitted to an application to which continuity is set among applications that are being executed. The view system may be a program that draws at least one layer based on a resolution of a display screen of a display module. An application of the application layer 210 described above may output (e.g., draw) a view (e.g., a view representing a window object corresponding to an application) based on a resolution of a display screen of a display module using the view system. The sensor manager may represent a software module that controls an application of a sensor. The activity manager may manage a lifecycle and an activity stack of an application. The activity manager may monitor an activity of an application.

The HAL 230 may represent an abstracted layer between a plurality of hardware modules included in the hardware layer 250 and software of the electronic device 200. The HAL may include an event hub and a surface flinger. The event hub may represent an interface module obtained by standardizing an event occurring in a touch module and a sensor module. The surface flinger may synthesize a plurality of layers. In an embodiment, the surface flinger may provide data representing the synthesized plurality of layers to a display controller.

The kernel layer 240 may include a variety of drivers for controlling various hardware modules included in the electronic device 200. The kernel layer may include a sensor driver, a display driver integrated circuit (IC) controller (DDI controller). The sensor driver may include an interface module that controls a sensor controller connected to a sensor. The DDI controller may control a display driver (DD) of a display panel. The display controller (DDI controller) may be implemented in terms of hardware or software.

The hardware layer 250 may include a sensor controller and a display panel. The sensor controller may identify the change in the state of the electronic device 200 based on the sensor module. The display panel may provide the display screen described above.

The application layer 210 according to an embodiment may include a multi-window (MW) handle module 290. The MW handle module 290 may be located at the application layer 210. In addition, the MW handle module 290 may process an input related to a handle portion of a window object corresponding to the application and perform an operation corresponding thereto. The handle portion may represent a defined portion for the control of the window object. Hereinafter, the adjustment of an input region (e.g., a touchable region) related to a movement of a window object based on a user input related to the handle portion will be described.

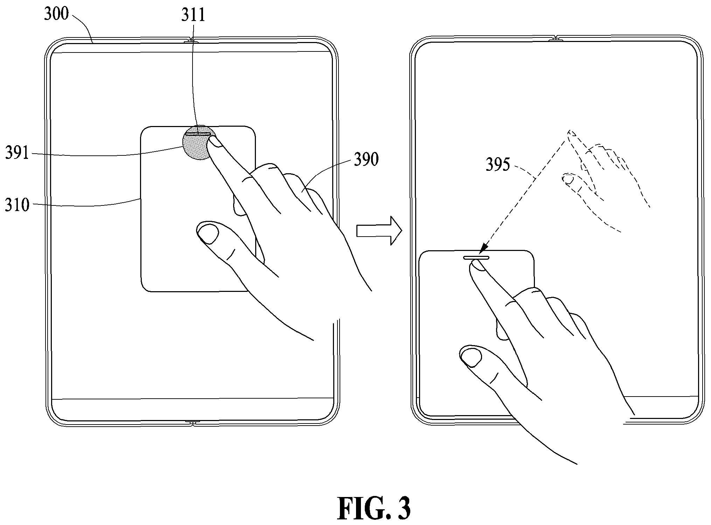

FIG. 3 illustrates a movement of a window object having a handle portion based on a user input according to an embodiment.

An electronic device 300 (e.g., the electronic device 101 of FIG. 1) according to an embodiment may output an application onto a display screen of a display. When the application is executed in a pop-up view, the electronic device 300 may output a window object 310 corresponding to the application onto the display screen. The electronic device 300 may display a handle portion 311 on a portion of the window object 310. The electronic device 300 may receive a user input 391 from a user 390.

When the user input 391 to the handle portion 311 is detected, the electronic device 300 may select the window object 310. The electronic device 300 may move the window object 310 within the display screen of the display along a movement trajectory 395 of the user input 391 while the window object 310 is selected. The movement trajectory 395 may be, for example, a set of points that are pointed by the user input 391 from the formation to the release of the user input 391. For example, electronic device 300 may detect a touch input to the handle portion 311. When the formation of touch is detected from a region (e.g., an input region which will be described below) related to the handle portion 311, the electronic device 300 may select the window object 310. The electronic device 300 may move the window object 310 according to the movement of a touch point. When the touch is released, the electronic device 300 may terminate the movement of the window object 310.

However, herein, an example, in which the electronic device includes a touch sensor and a pressure sensor and the user input 391 is mainly a touch input through the display module, will be mainly described, however, embodiments are not limited thereto. The user input 391 may be an input performed by a pointing device (e.g., a mouse and a pen) that is separate from the display module. For example, in the electronic device 300 that receives an input performed by a mouse, the formation of the user input 391 may be a mouse click, and the release of the user input 391 may be a click release. In another example, in the electronic device 300 that receives an input performed by a stylus pen, the formation of the user input 391 may be a touch using the stylus pen, and the release of the user input 391 may be the release of the touch using the stylus pen. The movement trajectory 395 may be a path of the movement of a pointer (e.g., a mouse cursor) while it is clicked.

As shown in FIG. 3, an area occupied by the handle portion 311 in the window object 310 may be relatively smaller than a total display area of the window object 310. Due to the small area of the handle portion 311, a failure of the user input 391 to the handle portion 311 may occur. The electronic device 300 according to an embodiment may collect a failure history of the user input 391 in relation to the handle portion 311. For example, the electronic device 300 may determine whether it is a failed input based on detection time points and/or detection positions of inputs related to the handle portion 311. The electronic device 300 may dynamically adjust at least one of a position or an area of an input region for the handle portion 311 and/or graphical representation indicating the handle portion 311 based on the failure history.

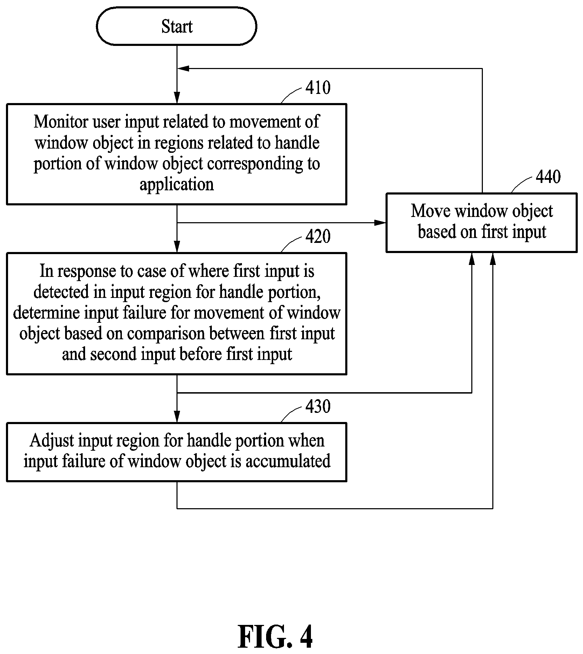

FIG. 4 is a flowchart illustrating a method of operating an electronic device for adjusting an input region according to a movement failure of a window object according to an embodiment.

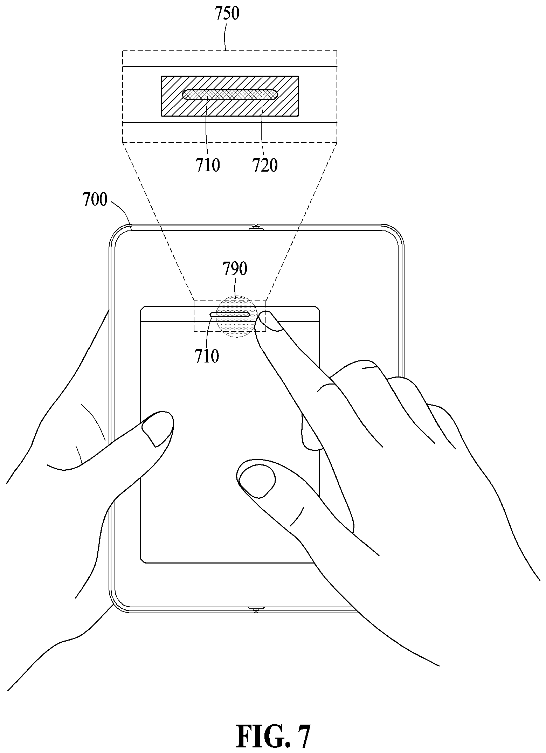

In operation 410, an electronic device (e.g., the electronic device 101 of FIG. 1) may monitor a user input related to a movement of a window object in regions related to a handle portion of the window object that is output onto a display and corresponds to an application. The regions related to the handle portion may include an input region and a detectable region. The input region may represent a region designated to receive an input for the control of the window object (e.g., movement, screen transition, and minimization of the window object). A detectable region may represent a region designated to detect an attempt to move a window object. The electronic device may distinguish between a user input detected from the input region and a user input detected from the detectable region. The input region and the detectable region will be described below with reference to FIG. 7.

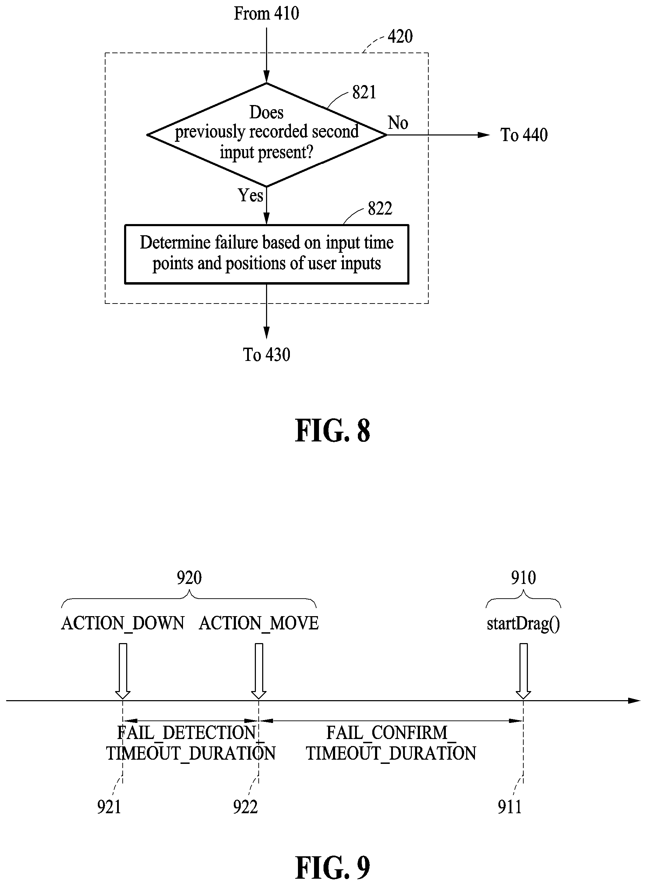

In operation 420, in response to a case where a first input is detected from the input region for the handle portion, the electronic device may determine an input failure for the movement of the window object based on comparison between the first input and a second input before the first input. The electronic device according to an embodiment may compare the first input and the second input using detection time points and detection positions of user inputs. For example, the first input may represent an input detected from the input region, and the second input may represent an input detected from the detectable region. When the second input to the handle portion of the application is determined as a failed input, the electronic device may update an input failure history of the corresponding application. The input failure may represent a failure of the control (e.g., the movement) of a window object through a handle portion that is intended by a user in a user input. The determining of the input failure will be described below with reference to FIGS. 8 to 11. When input failures for the window object are not accumulated, the electronic device according to an embodiment may increase a failure count of the input failures for the window object and perform operation 440.

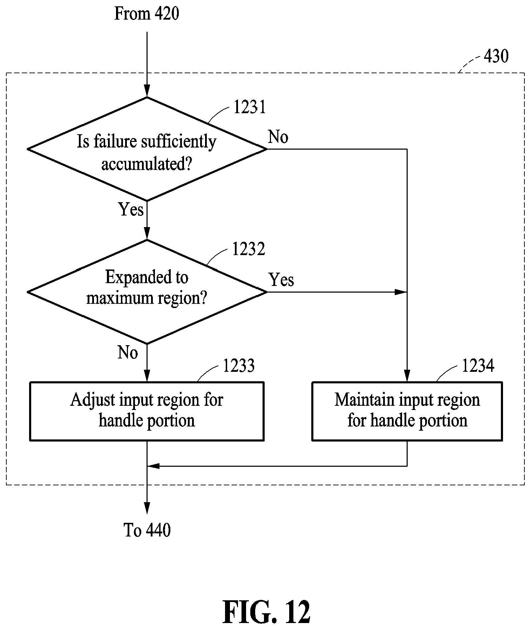

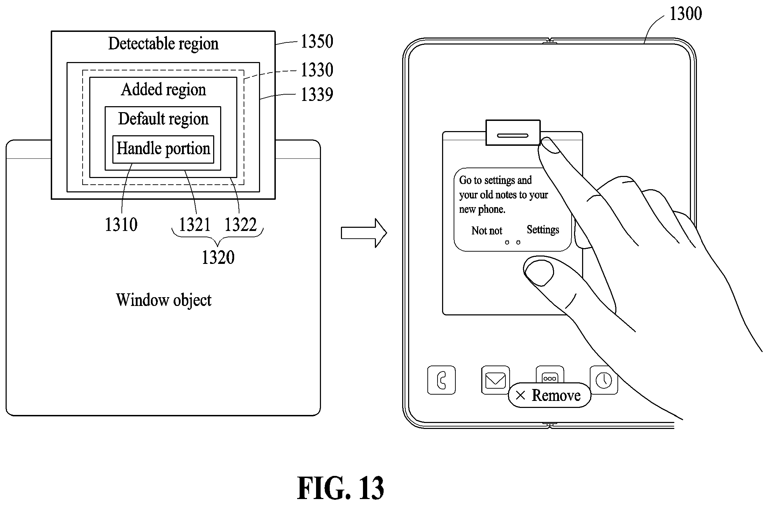

In operation 430, when the input failures for the window object are accumulated, the electronic device may adjust the input region for the handle portion. According to an embodiment, the electronic device may sequentially increase the input region each time the failure count accumulated at the time of each input failure for the application exceeds a threshold count. For example, in response to the change of the input region, the electronic device may also change the graphical representation indicating the handle portion. The electronic device may also output the handle portion as the graphical representation having an area corresponding to the changed input region. A dynamic change of the input region will be described below with reference to FIGS. 12 and 13.

For reference, the electronic device may reduce the input region for the handle portion based on the accumulation of input successes for the handle portion. The electronic device may gradually reduce the input region each time a success count of input exceeds a success threshold value. The input region may be reduced to a default region. The default region will be described below with reference to FIG. 13.

In operation 440, the electronic device may move the window object based on the first input. The electronic device may move the window object according to the first input independently of the accumulation of input failures for the application. For example, when a touch input is received as the first input in the input region for the handle portion, the electronic device may move the window object along a path from a point where a touch of the touch input is formed to a point where the touch is released. The electronic device may move the window object according to the first input in the input region that is changed according to the accumulation of input failures for the application. For example, the electronic device may increase the input region each time the failure count accumulated at the time of each input failure for the application exceeds the threshold count, and move the window object according to the first input in the increased input region.

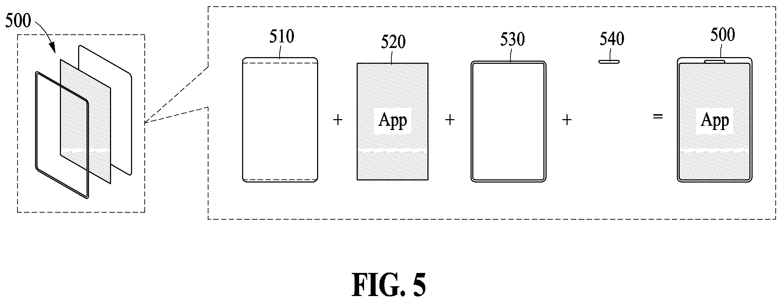

FIG. 5 illustrates an example of a configuration of a window object according to an embodiment.

An electronic device (e.g., the electronic device 101 of FIG. 1) according to an embodiment, for example, may output a window object 500 corresponding to a pop-up view of an application onto a display screen of a display. For example, the electronic device may output a handle portion 540 in the window object 500 corresponding to the application in response to the execution of the application. As described above, the handle portion 540 may represent a portion that is defined for control (e.g., movement) of the window object 500. In response to a user input related to the handle portion 540, the electronic device may control a state of a pop-up view of the application. The state of the pop-up view is a state in which an application is provided as a multi-window by the electronic device, and one or more applications transitioned into the state of the pop-up view may be output as the window object 500 onto one display screen of a display of the electronic device.

For example, the window object 500 may include a background 510, an application screen 520, a view frame 530, and the handle portion 540.

The background 510 may be disposed on a layer below the application screen 520. The background 510 may fill a portion within a region defined by the view frame 530, to which the application screen 520 is not output. In other words, the background 510 may prevent a blank portion with no application screen 520 in the view frame 530 from being viewed as a transparent portion.

The application screen 520 may represent a screen of an application that supports a pop-up view, which is drawn on a display screen of a display.

The view frame 530 may be disposed on a layer above the application screen 520. As shown in FIG. 5, a corner of the view frame 530 may be rounded, however, embodiments are not limited thereto.

The handle portion 540 may be output in a state of being overlaid on the background 510, the application screen 520, and the view frame 530 described above. For example, the electronic device may output the handle portion 540 with a default size at a default position that are designated in the window object 500 corresponding to the application that is transitioned into the pop-up view. As described above, in response to a case where an input is detected from a region related to the handle portion 540, the electronic device may control the state of the pop-up view of the application. For example, when a touch is formed in the region related to the handle portion 540 and a movement of a point of the formed touch is detected, the electronic device may move the window object 500 of the application together with the handle portion 540. In another example, in response to a case where a screen transition input is detected from the region related to the handle portion 540, the electronic device may transition the window object 500 of the application to one of a split view and a full screen view. In another example, in response to an input related to the transparency in the handle portion 540, the electronic device may adjust the transparency of the window object 500 of the application displayed in the state of the pop-up view. In response to a case where a transition input to the full screen is detected while displaying the window object 500 in the split view, the electronic device may release the split view of the window object 500. In another example, in response to a case where a screen minimization input for the application in the state of the pop-up view is detected, the electronic device may minimize the window object 500 of the application. In response to a case where the minimization input for the application in the state of the pop-up view is detected, the electronic device may stop outputting the window of the corresponding application, and output an icon object corresponding to the corresponding application onto the screen.

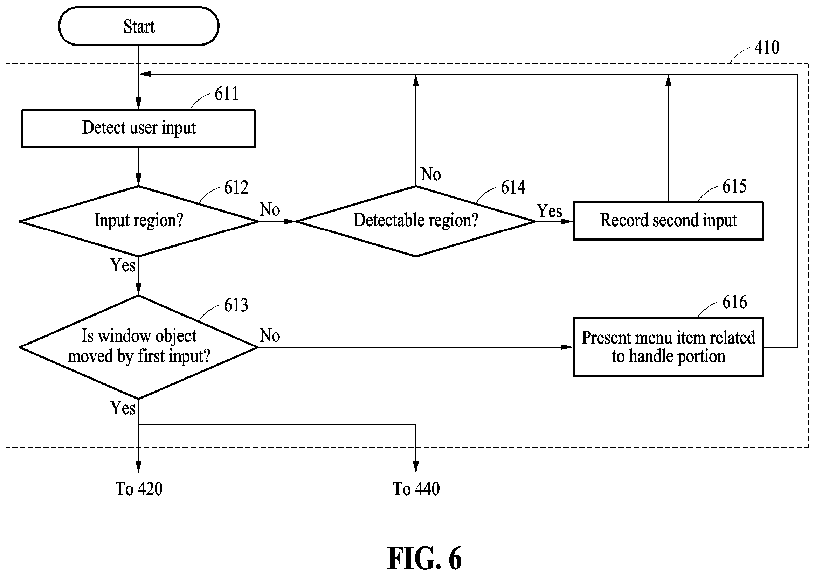

FIG. 6 is a flowchart illustrating an operation method according to a user input detected in regions related to a handle portion of a window object according to an embodiment. FIG. 7 illustrates an example of an input region and a detectable region for a handle portion according to an embodiment.

In operation 611, an electronic device 700 (e.g., the electronic device 101 of FIG. 1) may detect a user input 790 from a region (e.g., an input region 720 and a detectable region 750) related to a handle portion 710. The electronic device may detect the user input 790 from the handle portion 710 and a surrounding region including the handle portion 710. As shown in FIG. 7, regions related to the handle portion 710 may include the input region 720 and the detectable region 750. The input region 720 may be specified as a region having a larger area than the handle portion 710 and graphical representation corresponding to the handle portion 710. The detectable region 750 may be designated as a region outside the input region 720.

In operation 612, the electronic device 700 may determine whether the user input 790 is detected from the input region 720. The user input 790 detected in the input region 720 may be represented as a first input. The electronic device 700 may determine the user input 790 as the first input when the user input 790 detected in the input region 720 is maintained for a minimum period of time or longer. The minimum period of time may represent a time designated as a reference for determining whether the user input 790 is intended to move the window object. In order to move the window object, the user may maintain the user input 790 to the input region 720 for the handle portion 710 for the minimum period of time or longer.

In operation 613, the electronic device 700 may determine whether the window object is moved by the first input detected in operation 612. The electronic device 700 may track the movement of a point being pointed by the first input. When the first input moves, the electronic device 700 may determine whether the input is failed in operation 420. In addition, when the first input moves, the electronic device 700 may move the window object in response to the trajectory of the movement of the first input in operation 440.

In operation 614, the electronic device 700 may determine whether the user input 790 is detected in the detectable region 750. When the user input 790 is detected from the outside of the detectable region 750, the electronic device 700 may determine the corresponding user input 790 as an input independent of the handle portion 710.

In operation 615, when the user input 790 is detected from the detectable region 750, the electronic device 700 may record the corresponding user input 790 as a second input. The second input may be a potential failure candidate input that was intended to control (e.g., move) a window object but have failed. For reference, when a retention period has elapsed after detecting the second input, the electronic device may remove a record of the second input. As shown in FIG. 6, the electronic device 700 may continue monitoring the user input 790 in the input region 720 for the handle portion 710 of the window object until the first input is detected in the input region 720 of the handle portion 710.

In operation 616, although the first input is detected, when there is no movement of the window object, the electronic device 700 may present a menu item related to the handle portion 710. For example, even when the electronic device 700 detects the first input for the minimum period of time or longer in the input region 720 for the handle portion 710, the first input may be released without the movement of the window object. When the first input without the movement of the window object is released, the electronic device 700 may output manipulation items for screen transition, transparency adjustment, and minimization described above with reference to FIG. 5.

FIG. 8 is a flowchart illustrating an operation of determining an input failure according to an embodiment.

In operation 821, an electronic device (e.g., the electronic device 101 of FIG. 1) may determine whether a previously recorded second input is present. For example, the electronic device may determine whether the second input has been recorded in operation 615 described above with reference to FIG. 6. The electronic device may determine whether there is a history of the second input with a retention period that has not elapsed from a current time point. When the second input is not present or the second input is removed due to the elapse of the retention period, the electronic device may move the window object based on the first input according to operation 440.

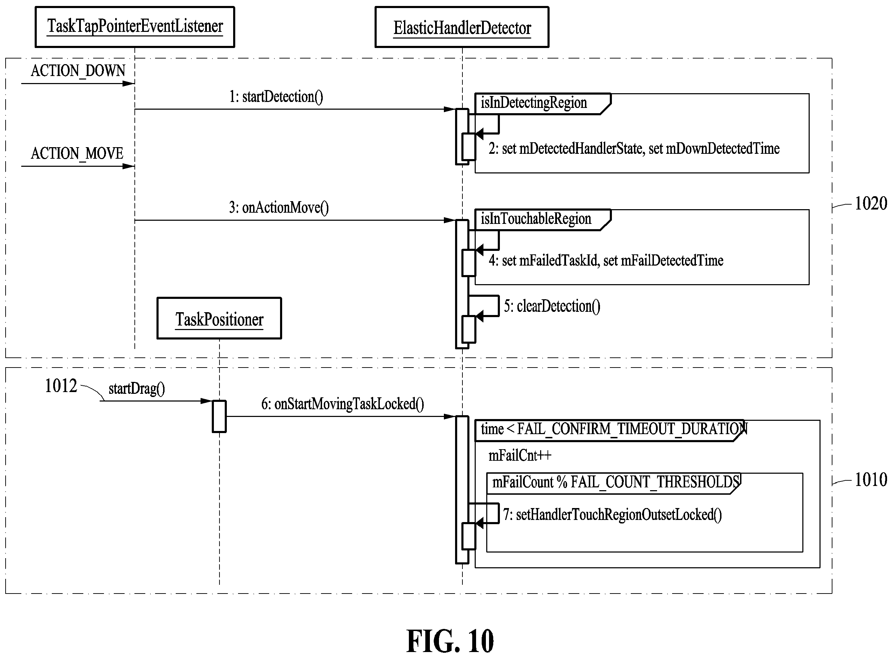

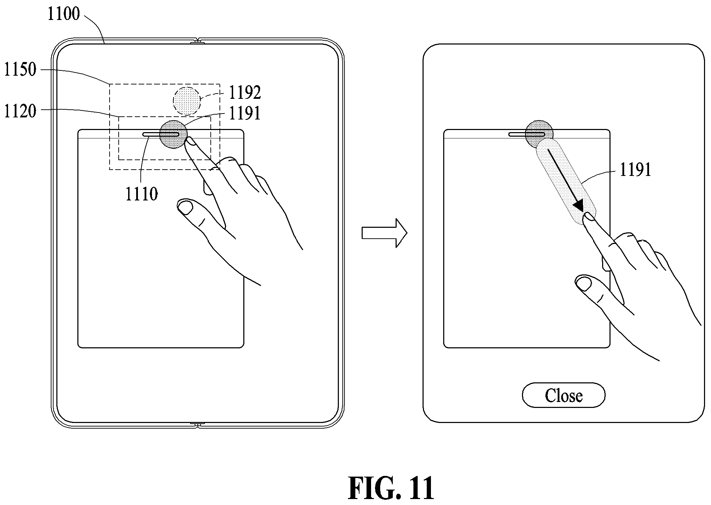

In operation 822, the electronic device may determine the input failure based on detection time points and positions of user inputs. For example, the electronic device may determine whether the input failure has occurred in the application based on comparison between a detection time point of the first input and a detection time point of the second input. The determining of the input failure using the detection time points will be described below with reference to FIGS. 9 and 10. In another example, the electronic device may determine whether the input failure has occurred in the application based on comparison between a detection position of the first input and a detection position of the second input. The determining of the input failure based on the detection positions of the user input will be described below with reference to FIG. 11.

For reference, when determining whether the input to the application is failed, the electronic device may exclude the number of past attempts (e.g., a history before the second input has occurred) to move the application. The electronic device may consider the failure of an input (e.g., the second input) immediately before a currently detected user input (e.g., the first input) within a period of time determined based on a current detection time point. The electronic device may exclude an earlier failure history from the determining of the input failure.

The electronic device according to an embodiment may collect and manage the input failure history of the user for the handle portion for each application. In other words, for a plurality of applications, an input failure history in a first application and an input failure history in a second application may be managed and updated individually and independently. The electronic device may dynamically adjust the graphical representation of the handle portion and/or size of the input region based on the input failure history of the user for the individual application.

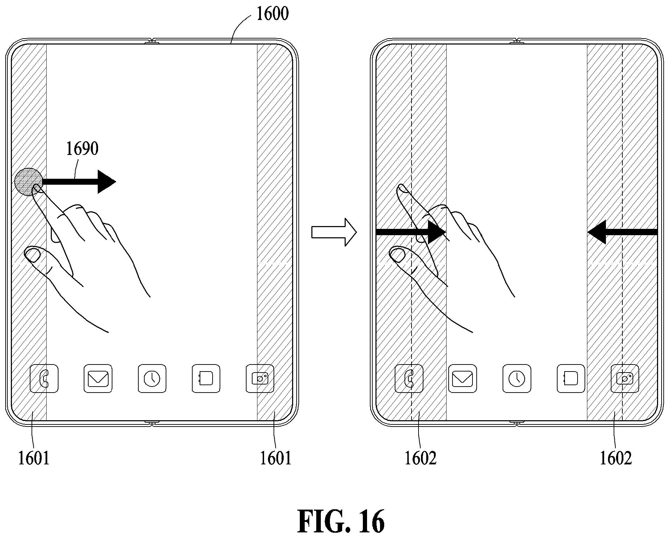

The electronic device according to an embodiment may quantify an input failure experience, and provide an automatically customized operable region (e.g., the input region for the handle portion) to a user based on the quantified input failure experience. The input region for the handle portion may adjust to a size that maximizes manipulation convenience of the user through the information collection described above. However, herein, the adjustment of the input region for the handle portion of the window object will be mainly described, however, embodiments are not limited thereto and may be applied to the adjustment of the region for side swipe to be described below with reference to FIG. 16.

FIGS. 9 and 10 are diagrams illustrating determination of an input failure based on detection time points according to an embodiment. In response to a case where a window object starts movement by a first input 910, an electronic device (e.g., the electronic device 101 of FIG. 1) according to an embodiment may determine whether an input failure for the window object has occurred based on comparison between a detection time point of a second input 920 and a detection time point of the first input 910. For example, in response to a case where a time difference between the detection time point of the second input 920 and the detection time point of the first input 910 is less than a threshold time, the electronic device may determine the second input 920 as a failed input. The electronic device may confirm whether there is the second input 920 recorded within the threshold time from the detection time point at which the first input 910 is detected. When the first input 910 is detected within the threshold time (e.g., a second threshold time to be described below) from the detection time point (e.g., a movement start time point 922 to be described below) of the second input 920, the electronic device may determine that the input failure has occurred for the corresponding application. Since user inputs to a window object of the same application have occurred successively over a threshold time, it may be interpreted that the user intended to move the window object with a previous input.

In addition, the electronic device may divide the threshold time described above into two stages to firstly determine a failure candidate and secondly determine an input failure.

For example, when a time difference between detection time points (e.g., an input occurrence time point 921 (e.g., ACTION_DOWN) of the second input 920 and the movement start time point 922 (e.g., ACTION_MOVE) of the second input 920) is less than a first threshold time (FAIL_DETECTION_TIMEOUT_DURATION) (e.g., 300 ms), the electronic device may set the window object as a potential failure candidate. The movement start time point 922 may represent a time point at which a touch point formed in a detectable region at the input occurrence time point 921 starts movement. The movement of the touch point may be interpreted as a movement attempt to move a window object. For reference, the second input 920 may be an input of the touch point formed in the detectable region moving towards the input region (e.g., a touchable region) or into the input region. For example, as described with reference to operation 615 of FIG. 6, the electronic device may record the second input 920 detected at the input occurrence time point 921.

As described above, when the second input 920 is set as the potential failure candidate, and then, the first input 910 is detected at the detection time point 911, the electronic device may compare detection time points between the second input 920 and the first input 910 described above. For example, in response to a case where the window object starts movement (startDrag) by the first input 910 within the second threshold time (FAIL_CONFIRM_TIMEOUT_DURATION) (e.g., 1,000 ms) from the movement start time point 922 among the detection time points of the second input 920, the electronic device may determine that the input failure has occurred in the window object. In other words, the electronic device may determine whether the previously determined potential failure candidate has failed through comparison between the detection time point (e.g., the movement start time point 922) of the second input 920, the detection time point 911 of the first input 910, and the second threshold time (FAIL_CONFIRM_TIMEOUT_DURATION). The electronic device may ignore failures that have occurred in the distant past based on the detection time point 911 of the first input 910 that has occurred later, and count failures that have occurred within threshold times as input failures.

FIG. 10 is a diagram illustrating a function call for the operation described above with reference to FIG. 9. In FIG. 10, TaskTapPointerEventListener may receive a touch event. TaskPositioner may move a position of a window object corresponding to an application. ElasticHandleDetector may determine whether a movement input of the window object has failed, record the number of failures, and determine a size of an input region. In operation 1020, the electronic device may detect the second input 920 at the detection time point (e.g., the movement start time point 922). Then, in operation 1010, the electronic device may compare the detection time points 922 and 911 between the second input 920 and the first input 910. For example, in operation 1012, the electronic device may start monitoring the movement of the window object by the first input 910 from the detection time point 911 of the first input 910.

The electronic device may increase the failure count for the application through the operations described above. Hereinafter, the determination of the input failure based on the detection positions of the input will be described with reference to FIG. 11.

FIG. 11 is a diagram illustrating determination of an input failure based on detection positions according to an embodiment.

An electronic device 1100 according to an embodiment may determine whether an input failure for a handle portion 1110 of a window object has occurred based on detection positions of a first input 1191 and a second input 1192. As shown in FIG. 11, regions related to the handle portion 1110 may include an input region 1120 and a detectable region 1150 for the handle portion 1110.

For example, when the first input 1191 is detected in the input region 1120 and the second input 1192 is detected in the detectable 1150 which is the outside of the input region 1120, the electronic device 1100 may determine that the input failure has occurred for the movement of the window object. Since the first input 1191 occurs in the input region 1120 that is closer to the handle portion 1110 after the second input 1192 occurs in the detectable region 1150 that is farther away from the handle portion 1110, the electronic device 1100 may determine that the previous second input 1192 is a movement failure of the window object.

In addition, in FIGS. 9 and 10, the electronic device 1100 may determine movement intent of the user to move the window object based on whether a region where the first input (e.g., a following touch) has occurred is closer to a region of the handle portion 1110 than a region where the second input (e.g., a preceding touch) has occurred, together with the threshold times described above. According to an embodiment, when the second input 1192 is detected in the detectable region 1150 and the first input 1191 is detected in the input region 1120 before a threshold time has elapsed, the electronic device 1100 may determine that the input failure for the movement of the window object has occurred. In other words, the electronic device 1100 may count the second input 1192 preceding the first input 1191 within the threshold time. For example, when the second input 1192 that has occurred to precede within the threshold time from the detection time point of the first input 1191 for the application, the electronic device 1100 may set the corresponding application as a failure candidate. When the movement of the window object starts within the second threshold time from the detection time point of the first input 1191 in the input region 1120, the electronic device 1100 may determine that the input failure has occurred in the application set as the failure candidate.

As described above, the electronic device 1100 may control the movement of the window object based on the first input 1191.

FIG. 12 is a flowchart illustrating an adjustment operation of an input region according to an embodiment. FIG. 13 is a diagram illustrating adjustment of an input region according to an embodiment.

In operation 1231, an electronic device 1300 (e.g., the electronic device 101 of FIG. 1) may determine whether input failures are sufficiently accumulated. In response to a case where it is determined that an input failure for the movement of a window object has occurred in FIG. 8, the electronic device 1300 may accumulate the input failure by increasing a failure count recorded for the window object. For example, the electronic device 1300 may add one failure count each time the input failure for the window object is determined. The electronic device 1300 may determine whether the accumulated failure count exceeds a threshold count (e.g., 4).

In operation 1232, when the failure count exceeds the threshold count, the electronic device 1300 may determine whether an input region 1320 set for a current handle portion 1310 is expanded to a maximum region.

In operation 1233, in response to a case where the failure count updated according to the accumulation of the input failure exceeds the threshold count, the electronic device 1300 may increase the input region 1320 by adding a preliminary region corresponding to the threshold count to a default region 1321 for the handle portion 1310. The electronic device 1300 may increase the input region 1320 and initialize the failure count. The electronic device 1300 may accumulate the failure count again after initialization. Accordingly, the electronic device 1300 may increase the input region 1320 in a stepwise manner each time the accumulation exceeding a threshold value of the failure count is repeated, until the input region 1320 becomes the maximum region. FIG. 13 shows an example in which the input region 1320 of the handle portion 1310 includes the default region 1321 and an added region 1322. When the failure count exceeds the threshold value, the electronic device 1300 may increase the input region 1320 by expanding the added region 1322 to a preliminary region boundary 1330. FIG. 13 shows only one preliminary region boundary 1330, however, embodiments are not limited thereto, and a plurality of preliminary region boundaries may be set between the default region 1321 and a maximum expanded boundary 1339. As described above, each time the accumulation of the failure counts is repeated, the electronic device 1300 may add the added region 1322 to the default region 1321 sequentially from an inner boundary to an outer boundary.

As shown in FIG. 13, the input region 1320 (e.g., a touchable region) may include the default region 1321 and the added region 1322. The default region 1321 may include a region occupied by graphical representation indicating the handle portion 1310 and a region around the graphical representation. The added region 1322 is a region added to manipulate the handle portion 1310 based on the failure count described above, and may be a partial region of a region outside the boundary of the default region 1321. The added region 1322 may be expanded in a stepwise manner (e.g., in five stages) by preliminary region boundaries to the maximum expanded boundary 1339. A maximum region may represent a region defined by the maximum expanded boundary 1339. A detectable region 1350 may be a partial region of the region outside the boundary of the touchable region. The maximum expanded boundary 1339 may be located inside the detectable region 1350.

In operation 1234, when the failures are not sufficiently accumulated or the input region 1320 is expanded to the maximum region, the electronic device 1300 may maintain the input region 1320 for the handle portion 1310.

For reference, the electronic device 1300 may reduce an area of the input region 1320 for the handle region if the failure experience is reduced. For example, when the movement of the window object continues to succeed by the user input for the adjusted input region 1320, the electronic device 1300 may gradually reduce the input region 1320 to the default region 1321 in proportion to a success count.

However, embodiments are not limited thereto, and a plurality of threshold values may be set for the failure count. The electronic device 1300 may set preliminary regions corresponding to the plurality of threshold values. A first preliminary region to an m-th preliminary region may be designated individually from a first threshold value to an m-th threshold value. Here, m is an integer greater than or equal to 2. An i-th preliminary region may be larger than a (i-1)-th preliminary region and may include the (i-1)-th region. Here, i may be an integer greater than or equal to 2 and less than or equal to m. The electronic device 1300 may have several preliminary regions such as an initial added region and a maximum added region. In this example, the electronic device 1300 may continue to accumulate the failure count for the corresponding application without initializing the failure count, even if the failure count exceeds one of a plurality of threshold values.

For example, in response to a case where the failure count exceeds one of the plurality of threshold values, the electronic device 1300 may set a touchable region for the handle portion 1310 by adding a preliminary region corresponding to the corresponding threshold value to the default region 1321. The electronic device 1300 may set a touchable region including the (i-1)-th preliminary region and the default region 1321 to the handle portion 1310 until the failure count that is more than or equal to a (i-1)-th threshold value and less than an i-th threshold value. When the failure count is more than or equal to the i-th threshold value, that is, in response to a case where the failure count reaches the i-th threshold value, the electronic device 1300 may set, as the handle portion 1310, the touchable region in which the i-th preliminary region that replaces the (i-1)-th preliminary region is added to the default region 1321. Accordingly, the electronic device 1300 may change the touchable region to a touchable region including a next preliminary region each time the failure count reaches one of the plurality of threshold values. Accordingly, the electronic device 1300 may provide the user with the touchable region that is increased in a stepwise manner for the handle portion 1310 according to the increase of the failure count. However, here, the example in which the electronic device automatically sets the touchable region when the failure count reaches the threshold value has been described above, however, embodiments are not limited thereto. When the failure count reaches the threshold value, the electronic device may also present one or more adjustable preliminary regions to the user. The electronic device may also add a preliminary region selected by the user among the one or more preliminary regions to the touchable region.

As shown in FIG. 13, an area of the input region 1320 (e.g., the touchable region) set to be invisible to the handle portion 1310 may be adjusted to be larger than an area of the handle portion 1310 that is visually displayed.

In response to a user input to a touchable region adjusted with respect to the handle portion 1310 based on the failure count as described above, the electronic device may control the window of an application screen corresponding to the handle portion 1310. Accordingly, despite the small size of the handle portion 1310, the electronic device 1300 may assist the user in controlling the window object using the handle portion 1310. For reference, here, the example in which the preliminary region is added to the touch region in a stepwise manner has been described above, however, embodiments are not limited thereto. The electronic device may also determine an area of a region to be added to the touch region based on the type of the user's touch, a width of the area being touched (e.g., a finger width), and/or a movement speed of the touch (e.g., dragging). For example, the electronic device may expand directly from the default region 1321 to the maximum expanded boundary 1339.

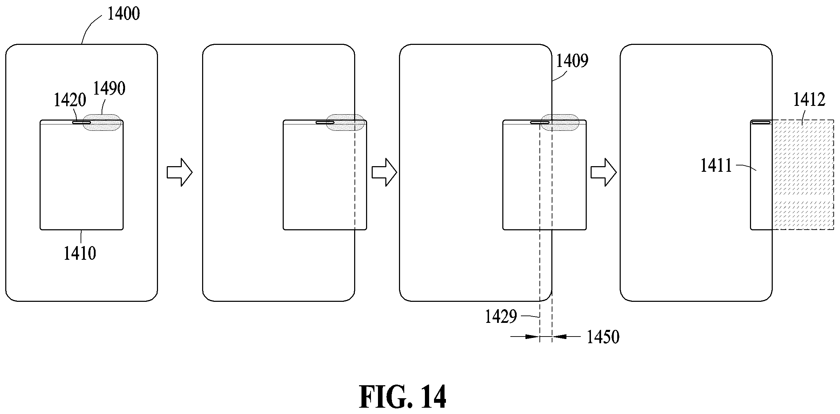

FIG. 14 is a diagram illustrating a screen hiding operation according to a movement of a window object of an application according to an embodiment.

An electronic device 1400 according to an embodiment (e.g., the electronic device 101 of FIG. 1) may cover a partial screen of an application screen displayed in a pop-up view when moving. For example, while a window object 1410 corresponding to an application screen is moved while maintaining an input 1490 to a handle portion 1420, the electronic device 1400 may monitor whether at least one or a combination of two or more of an outer boundary of the window object 1410, an inner boundary of the window object 1410, or the handle portion 1420 approach a boundary of a display screen. The outer boundary of the window object 1410 may represent a border of the window object 1410 displayed in a pop-up view. The inner boundary of window object 1410 may represent a defined boundary within a region occupied by the window object 1410 displayed in a pop-up view.

When at least one or a combination of two or more of the outer boundary, the inner boundary, or the handle portion 1420 approach the boundary of the display screen described above, the electronic device 1400 may expose a partial region of an edge of the application screen to the display screen and remove the remaining region from the display screen. When a distance 1450 between a boundary 1429 of the handle portion 1420 and a boundary 1409 of the display screen is less than a threshold distance, the electronic device 1400 may perform a hiding operation to be described below.

The electronic device 1400 may determine a partial region 1411 to be exposed based on the handle portion 1420. For example, by moving the application screen along a touch drag direction based on the handle portion 1420, the electronic device 1400 may hide a remaining region 1412 by moving the remaining region 1412 to the outside of the display screen, and maintain the partial region 1411 within the display screen.

Accordingly, in response to the user input 1490 through the handle portion 1420, the electronic device 1400 may hide a portion of the application screen based on the handle portion 1420 and a drag direction. For example, the handle portion 1420 may be relatively moved to one of right or left side on a top bar of the window object 1410 based on the application.

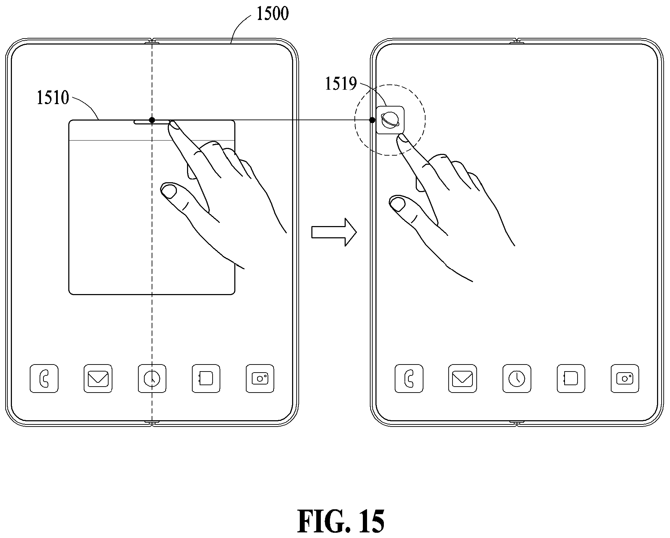

FIG. 15 is a diagram illustrating a minimization operation of a window object according to an embodiment.

According to an embodiment, an electronic device 1500 (e.g., the electronic device 101 of FIG. 1) may determine a position of an icon object 1519 that is minimized from a window object 1510 of an application displayed in a pop-up view. For example, the electronic device 1500 may output the minimized icon object 1519 corresponding to the application to be adjacent to a near edge among right and left edges of a display screen based on a Y value (e.g., a coordinate along a horizontal axis) of the handle portion. In other words, the electronic device 1500 may output the icon object 1519 minimized from the window object 1510 to one side (e.g., right or left side) of a bezel based on a center of a screen according to a horizontal axis coordinate (e.g., an x coordinate) of the window object 1510 displayed in a pop-up view.

When the corresponding minimized application is terminated by the user, the electronic device 1500 may record a position at a terminated time point as a last position. For example, the electronic device 1500 may display a minimized icon (e.g., the icon object 1519) of the window object 1510 displayed in a pop-up view at the last position (e.g., a position where it is minimized and terminated).

FIG. 16 is a diagram illustrating adjustment of a swipe region according to an embodiment.

According to an embodiment, an electronic device 1600 (e.g., the electronic device 101 of FIG. 1) may determine whether a gesture input has erroneously operated at an edge of the display screen. The electronic device 1600 may adjust a region for a gesture input 1690 according to an erroneous operation count.

For example, in response to a case where failures of a swipe-back input for transition to a previous view are accumulated, the electronic device 1600 may increase an edge region for the swipe-back input on the display. When a content swipe input is detected and a swipe-back input is detected at a position closer to an edge of a display screen within a threshold time, the electronic device 1600 may determine a previous content swipe input as a failure of the swipe-back input. When the failures of the swipe-back input are accumulated, the electronic device 1600 may increase the edge region for the swipe-back input as shown in FIG. 16. The electronic device 1600 may detect the swipe-back input in an increased edge region 1602.

In another example, in response to a case where the failures of the content swipe input for transition of the content are accumulated, the electronic device 1600 may reduce the edge region for the swipe-back input on the display. When the swipe-back input is detected and a content transition input is detected at a position farther from the edge of the display screen within the threshold time, the electronic device 1600 may determine a previous swipe-back input as a failure of the content swipe input. When the content transition failure is accumulated, the electronic device 1600 may reduce the edge region shown in FIG. 16. The electronic device 1600 may detect the swipe-back input in a reduced edge region 1601, and detect the content swipe input in a remaining region.

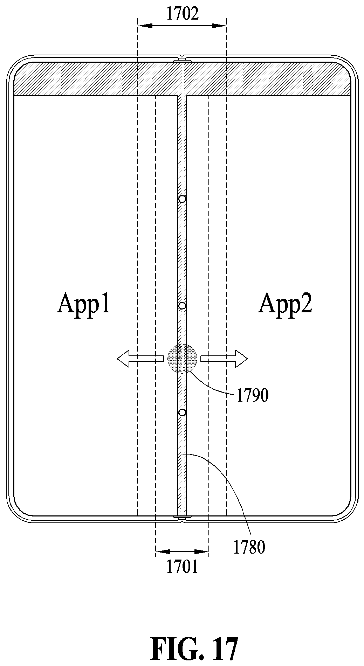

FIG. 17 is a diagram illustrating adjustment of a region for setting a divider line according to an embodiment.

According to an embodiment, an electronic device 1700 (e.g., the electronic device 101 of FIG. 1) may display two or more applications App1 and App2 simultaneously on a display screen. The electronic device 1700 may divide the display screen into a plurality of regions, and display two or more applications App1 and App2 in assigned regions, respectively. A line separating the two or more applications App1 and App2 may be shown as a divider line 1780. In response to a user input 1790 to the divider line 1780, the electronic device 1700 may change a position of the divider line 1780. In other words, an area of the regions defined by the divider line 1780 may be changed. The electronic device 1700 may determine whether the user input 1790 to the divider line 1780 described above is erroneously operated. The electronic device 1700 may adjust a region for the user input 1790 to the divider line 1780 according to an erroneous operation count.

For example, in response to a case where failures of a drag input for changing the position of the divider line 1780 are accumulated, the electronic device 1700 may increase a region for adjustment of the divider line 1780 on the display. When an input is detected in the two or more applications App1 and App2, and a drag input is detected at a position closer to the divider line 1780 of the display screen within the threshold time, the electronic device 1700 may determine the input in the previous two or more applications App1 and App2 as an adjustment failure of the divider line 1780. When the adjustment failure of the divider line 1780 is accumulated, the electronic device 1700 may increase a region for the adjustment of the divider line 1780 as shown in FIG. 17. The electronic device 1700 may detect a drag input in an increased region 1702.

In another example, in response to a case where a success of an input to the divider line 1780 is accumulated, the electronic device 1700 may reduce a region for the adjustment of the divider line 1780 on the display. When the divider line 1780 is adjusted without the input failure, the electronic device 1700 may increase an input success count for the divider line 1780. When the input success is accumulated, the electronic device 1700 may reduce the region for the adjustment of the divider line 1780 shown in FIG. 17. The electronic device 1700 may detect a drag input in a reduced area 1701, and detect an input to the two or more applications App1 and App2 in a remaining region.

## Claims

1. An electronic device comprising:
a display;
a memory storing computer-executable instructions; and
a processor configured to execute the instructions by accessing the memory,
wherein the instructions are configured to:
monitor a user input (790) related to a movement of a window object (310) in regions related to a handle portion (710) of a window object output to the display;
in response to a case where a first input is detected in an input region (720) for the handle portion, determine an input failure for the movement of the window object based on comparison between the first input and a second input before the first input; and
when the input failure is accumulated for the window object, adjust the input region for the handle portion.

2. The electronic device of claim 1, wherein the instructions are configured to:
in response to a case where the window object starts movement by the first input, determine whether the input failure for the window object has occurred based on comparison between a detection time point of the first input and a detection time point of the second input.

3. The electronic device of claim 1 or 2, wherein the instructions are configured to:
in response to a case where a time difference between the detection time point of the first input and the detection time point of the second input is less than a threshold time, determine the second input as a failed input.

4. The electronic device of one of claims 1 to 3, wherein the instructions are configured to:
when a time difference between an input occurrence time point of the second input and a movement start time point of the second input is less than a first threshold time, set the window object as a failure candidate; and
in response to a case where the window object starts movement by the first input within a second threshold time from the movement start time point of the second input, determine that the input failure has occurred for the window object.

5. The electronic device of one of claims 1 to 4, wherein the instructions are configured to:
determine whether an input failure for the handle portion of the window object has occurred based on detection positions of the first input and the second input.

6. The electronic device of one of claims 1 to 5, wherein the instructions are configured to:
when the first input is detected in the input region and the second input is detected in a detectable region that is outside of the input region, determine that the input failure for the movement of the window object has occurred.

7. The electronic device of one of claims 1 to 6, wherein the instructions are configured to:
when the second input is detected in the detectable region and the first input is detected in the input region before the threshold time has elapsed, determine that the input failure for the movement of the window object has occurred.

8. The electronic device of one of claims 1 to 7, wherein the instructions are configured to:
in response to a case where it is determined that the input failure for the movement of the window object has occurred, accumulate the input failure by increasing a failure count recorded for the window object.

9. The electronic device of one of claims 1 to 8, wherein the instructions are configured to:
in response to a case where the failure count updated according to the accumulation of the input failure exceeds a threshold count, increase the input region by adding a preliminary region corresponding to the threshold count to a default region for the handle portion.

10. The electronic device of one of claims 1 to 9, wherein the instructions are configured to:
in response to a case where a failure of a swipe-back input for transitioning to a previous view is accumulated, increase an edge region for the swipe-back input on the display; and
in response to a case where a failure of a content swipe input for transitioning a content is accumulated, reduce the edge region for the swipe-back input on the display.

11. A method to be implemented by a processor, the method comprising:
monitoring a user input related to a movement of a window object in regions related to a handle portion of a window object output to a display;
in response to a case where a first input is detected in an input region for the handle portion, determining an input failure for the movement of the window object based on comparison between the first input and a second input before the first input; and
when the input failure is accumulated for the window object, adjusting the input region for the handle portion.

12. The method of claim 11, wherein the determining of the input failure comprises:
in response to a case where the window object starts movement by the first input, determining whether the input failure for the window object has occurred based on comparison between a detection time point of the first input and a detection time point of the second input.

13. The method of claim 11 or 12, wherein the determining of whether the input failure has occurred comprises:
in response to a case where a time difference between the detection time point of the first input and the detection time point of the second input is less than a threshold time, determining the second input as a failed input.

14. The method of one of claims 11 to 13, wherein the determining of whether the input failure has occurred comprises:
when a time difference between an input occurrence time point of the second input and a movement start time point of the second input is less than a first threshold time, setting the window object as a failure candidate; and
in response to a case where the window object starts movement by the first input within a second threshold time from the movement start time point of the second input, determining that the input failure has occurred for the window object.

15. A non-transitory computer-readable storage medium storing instructions that, when executed by a processor, cause the processor to perform the method of one of claims 11 to 14.

## Patentansprüche

1. Elektronische Vorrichtung, umfassend:
eine Anzeige;
einen Speicher, der computerausführbare Anweisungen speichert; und
einen Prozessor, der dazu konfiguriert ist, die Anweisungen durch Zugreifen auf den Speicher auszuführen, wobei die Anweisungen zu Folgendem konfiguriert sind:
Überwachen einer Benutzereingabe (790) im Zusammenhang mit einer Bewegung eines Fensterobjekts (310)
in Bereichen im Zusammenhang mit einem einen Griffabschnitt (710) eines Fensterobjekts, das an die Anzeige ausgegeben wird;
in Reaktion auf einen Fall, in dem eine erste Eingabe in einem Eingabebereich (720) für den Griffabschnitt erfasst wird,
Bestimmen eines Eingabefehlers für die Bewegung des Fensterobjekts basierend auf einem Vergleich zwischen der ersten Eingabe und einer zweiten Eingabe vor der ersten Eingabe; und
wenn der Eingabefehler für das Fensterobjekt akkumuliert wird, Anpassen des Eingabebereichs für den Griffabschnitt.

2. Elektronische Vorrichtung nach Anspruch 1, wobei die Anweisungen zu Folgendem konfiguriert sind:
als Reaktion auf einen Fall, in dem das Fensterobjekt eine Bewegung durch die erste Eingabe startet, Bestimmen, ob der Eingabefehler für das Fensterobjekt aufgetreten ist, basierend auf einem Vergleich zwischen einem Erfassungszeitpunkt der ersten Eingabe und einem Erfassungszeitpunkt der zweiten Eingabe.

3. Elektronische Vorrichtung nach Anspruch 1 oder 2, wobei die Anweisungen zu Folgendem konfiguriert sind:
als Reaktion auf einen Fall, in dem eine Zeitdifferenz zwischen dem Erfassungszeitpunkt der ersten Eingabe und dem Erfassungszeitpunkt der zweiten Eingabe kleiner als eine Schwellenzeit ist, Bestimmen der zweiten Eingabe als eine fehlgeschlagene Eingabe.

4. Elektronische Vorrichtung nach einem der Ansprüche 1 bis 3, wobei die Anweisungen zu Folgendem konfiguriert sind:
wenn eine Zeitdifferenz zwischen einem Eingabeauftrittszeitpunkt der zweiten Eingabe und einem Bewegungsstartzeitpunkt der zweiten Eingabe kleiner als eine erste Schwellenzeit ist, Einstellen des Fensterobjekts als einen Fehlerkandidaten; und
als Reaktion auf einen Fall, in dem das Fensterobjekt eine Bewegung durch die erste Eingabe innerhalb einer zweiten Schwellenzeit ab dem Bewegungsstartzeitpunkt der zweiten Eingabe startet, Bestimmen, dass der Eingabefehler für das Fensterobjekt aufgetreten ist.

5. Elektronische Vorrichtung nach einem der Ansprüche 1 bis 4, wobei die Anweisungen zu Folgendem konfiguriert sind:
Bestimmen, ob ein Eingabefehler für den Griffabschnitt des Fensterobjekts aufgetreten ist, basierend auf Erfassungspositionen der ersten Eingabe und der zweiten Eingabe.

6. Elektronische Vorrichtung nach einem der Ansprüche 1 bis 5, wobei die Anweisungen zu Folgendem konfiguriert sind:
wenn die erste Eingabe in dem Eingabebereich erfasst wird und die zweite Eingabe in einem erfassbaren Bereich erfasst wird, der außerhalb des Eingabebereichs liegt, Bestimmen, dass der Eingabefehler für die Bewegung des Fensterobjekts aufgetreten ist.

7. Elektronische Vorrichtung nach einem der Ansprüche 1 bis 6, wobei die Anweisungen zu Folgendem konfiguriert sind:
wenn die zweite Eingabe in dem erfassbaren Bereich erfasst wird und die erste Eingabe in dem Eingabebereich erfasst wird, bevor die Schwellenzeit verstrichen ist, Bestimmen, dass der Eingabefehler für die Bewegung des Fensterobjekts aufgetreten ist.

8. Elektronische Vorrichtung nach einem der Ansprüche 1 bis 7, wobei die Anweisungen zu Folgendem konfiguriert sind:
als Reaktion auf einen Fall, in dem bestimmt wird, dass der Eingabefehler für die Bewegung des Fensterobjekts aufgetreten ist, Akkumulieren des Eingabefehlers durch Erhöhen einer Fehlerzählung, die für das Fensterobjekt aufgezeichnet wurde.

9. Elektronische Vorrichtung nach einem der Ansprüche 1 bis 8, wobei die Anweisungen zu Folgendem konfiguriert sind:
als Reaktion auf einen Fall, in dem die gemäß der Akkumulation des Eingabefehlers aktualisierte Fehlerzählung eine Schwellenzählung überschreitet, Vergrößern des Eingabebereichs durch Hinzufügen eines vorläufigen Bereichs, die der Schwellenzählung entspricht, zu einem Standardbereich für den Griffabschnitt.

10. Elektronische Vorrichtung nach einem der Ansprüche 1 bis 9, wobei die Anweisungen zu Folgendem konfiguriert sind:
als Reaktion auf einen Fall, in dem ein Fehler einer Swipe-Back-Eingabe zum Übergang zu einer vorherigen Ansicht akkumuliert wird, Vergrößern eines Randbereichs für die Swipe-Back-Eingabe auf der Anzeige; und
als Reaktion auf einen Fall, in dem ein Fehler einer Content-Swipe-Eingabe zum Übergang eines Inhalts akkumuliert wird, Reduzieren des Randbereichs für die Swipe-Back-Eingabe auf der Anzeige.

11. Verfahren, das durch einen Prozessor zu implementieren ist, wobei das Verfahren Folgendes umfasst:
Überwachen einer Benutzereingabe im Zusammenhang mit einer Bewegung eines Fensterobjekts in Bereichen im Zusammenhang mit einem einen Griffabschnitt eines Fensterobjekts, das an eine Anzeige ausgegeben wird;
als Reaktion auf einen Fall, in dem eine erste Eingabe in einem Eingabebereich für den Griffabschnitt erfasst wird, Bestimmen eines Eingabefehlers für die Bewegung des Fensterobjekts basierend auf einem Vergleich zwischen der ersten Eingabe und einer zweiten Eingabe vor der ersten Eingabe; und
wenn der Eingabefehler für das Fensterobjekt akkumuliert wird, Anpassen des Eingabebereichs für den Griffabschnitt.

12. Verfahren nach Anspruch 11, wobei das Bestimmen des Eingabefehlers Folgendes umfasst:
als Reaktion auf einen Fall, in dem das Fensterobjekt eine Bewegung durch die erste Eingabe startet, Bestimmen, ob der Eingabefehler für das Fensterobjekt aufgetreten ist, basierend auf einem Vergleich zwischen einem Erfassungszeitpunkt der ersten Eingabe und einem Erfassungszeitpunkt der zweiten Eingabe.

13. Verfahren nach Anspruch 11 oder 12, wobei das Bestimmen, ob der Eingabefehler aufgetreten ist, Folgendes umfasst:
als Reaktion auf einen Fall, in dem eine Zeitdifferenz zwischen dem Erfassungszeitpunkt der ersten Eingabe und dem Erfassungszeitpunkt der zweiten Eingabe kleiner als eine Schwellenzeit ist, Bestimmen der zweiten Eingabe als eine fehlgeschlagene Eingabe.

14. Verfahren nach einem der Ansprüche 11 bis 13, wobei das Bestimmen, ob der Eingabefehler aufgetreten ist, Folgendes umfasst:
wenn eine Zeitdifferenz zwischen einem Eingabeauftrittszeitpunkt der zweiten Eingabe und einem Bewegungsstartzeitpunkt der zweiten Eingabe kleiner als eine erste Schwellenzeit ist, Einstellen des Fensterobjekts als einen Fehlerkandidaten; und
als Reaktion auf einen Fall, in dem das Fensterobjekt eine Bewegung durch die erste Eingabe innerhalb einer zweiten Schwellenzeit ab dem Bewegungsstartzeitpunkt der zweiten Eingabe startet, Bestimmen, dass der Eingabefehler für das Fensterobjekt aufgetreten ist.

15. Nichtflüchtiges computerlesbares Speichermedium, das Anweisungen speichert, die, wenn sie von einem Prozessor ausgeführt werden, bewirken, dass der Prozessor das Verfahren nach einem der Ansprüche 11 bis 14 durchführt.

## Revendications

1. Dispositif électronique comprenant :
un dispositif d'affichage ;
une mémoire stockant des instructions exécutables par ordinateur ; et
un processeur configuré pour exécuter les instructions en accédant à la mémoire,
dans lequel les instructions sont configurées pour :
surveiller une saisie utilisateur (790) liée à un mouvement d'un objet fenêtre (310) dans des régions liées à une partie de poignée (710) d'un objet fenêtre émis en sortie sur le dispositif d'affichage ;
en réponse à un cas où une première saisie est détectée dans une région de saisie (720) pour la partie de poignée, déterminer une défaillance de saisie pour le mouvement de l'objet fenêtre sur la base d'une comparaison entre la première saisie et une seconde saisie avant la première saisie ; et
lorsque la défaillance de saisie est accumulée pour l'objet fenêtre, ajuster la région de saisie pour la partie de poignée.

2. Dispositif électronique de la revendication 1, dans lequel les instructions sont configurées pour :
en réponse à un cas où l'objet fenêtre commence un mouvement par la première saisie, déterminer si la défaillance de saisie pour l'objet fenêtre s'est produite sur la base d'une comparaison entre un instant de détection de la première saisie et un instant de détection de la seconde saisie.

3. Dispositif électronique de la revendication 1 ou 2, dans lequel les instructions sont configurées pour :
en réponse au cas où une différence de temps entre l'instant de détection de la première saisie et l'instant de détection de la seconde saisie est inférieure à un temps seuil, déterminer la seconde saisie comme saisie défaillante.

4. Dispositif électronique de l'une des revendications 1 à 3, dans lequel les instructions sont configurées pour :
lorsqu'une différence de temps entre un instant d'occurrence de saisie de la seconde saisie et un instant de début de mouvement de la seconde saisie est inférieure à un premier temps seuil, définir l'objet fenêtre en tant que candidat de défaillance ; et
en réponse à un cas où l'objet fenêtre commence un mouvement par la première saisie dans la limite d'un second temps seuil à partir de l'instant de début de mouvement de la seconde saisie, déterminer que la défaillance de saisie s'est produite pour l'objet fenêtre.

5. Dispositif électronique de l'une des revendications 1 à 4, dans lequel les instructions sont configurées pour :
déterminer si une défaillance de saisie pour la partie de poignée de l'objet fenêtre s'est produite sur la base de positions de détection de la première saisie et de la seconde saisie.

6. Dispositif électronique de l'une des revendications 1 à 5, dans lequel les instructions sont configurées pour :
lorsque la première saisie est détectée dans la région de saisie et la seconde saisie est détectée dans une région détectable qui est à l'extérieur de la région de saisie, déterminer que la défaillance de saisie pour le mouvement de l'objet fenêtre s'est produite.

7. Dispositif électronique de l'une des revendications 1 à 6, dans lequel les instructions sont configurées pour :
lorsque la seconde saisie est détectée dans la région détectable et que la première saisie est détectée dans la région de saisie avant que le temps seuil ne se soit écoulé, déterminer que la défaillance de saisie pour le mouvement de l'objet fenêtre s'est produite.

8. Dispositif électronique de l'une des revendications 1 à 7, dans lequel les instructions sont configurées pour :
en réponse à un cas où il est déterminé que la défaillance de saisie pour le mouvement de l'objet fenêtre s'est produite, accumuler la défaillance de saisie en augmentant un nombre de défaillances enregistrées pour l'objet fenêtre.

9. Dispositif électronique de l'une des revendications 1 à 8, dans lequel les instructions sont configurées pour :
en réponse à un cas où le nombre de défaillances mis à jour en fonction de l'accumulation de la défaillance de saisie dépasse un nombre seuil, augmenter la région de saisie en ajoutant une région préliminaire correspondant au nombre seuil à une région par défaut pour la partie de poignée.

10. Dispositif électronique de l'une des revendications 1 à 9, dans lequel les instructions sont configurées pour :
en réponse à un cas où une défaillance d'une saisie par balayage arrière pour une transition vers une vue précédente est accumulée, augmenter une région de bord pour la saisie par balayage arrière sur le dispositif d'affichage ; et
en réponse à un cas où une défaillance d'une saisie par balayage de contenu pour la transition d'un contenu est accumulée, réduire la région de bord pour la saisie par balayage arrière sur le dispositif d'affichage.

11. Procédé destiné à être mis en œuvre par un processeur, le procédé comprenant :
la surveillance d'une saisie utilisateur liée à un mouvement d'un objet fenêtre dans des régions liées à une partie de poignée d'un objet fenêtre émis en sortie vers un dispositif d'affichage ;
en réponse à un cas où une première saisie est détectée dans une région de saisie pour la partie poignée, la détermination d'une défaillance de saisie pour le mouvement de l'objet fenêtre sur la base d'une comparaison entre la première saisie et une seconde saisie avant la première saisie ; et
lorsque la défaillance de saisie est accumulée pour l'objet fenêtre, l'ajustement de la région de saisie pour la partie de poignée.

12. Procédé de la revendication 11, dans lequel la détermination de la défaillance de saisie comprend :
en réponse à un cas où l'objet fenêtre commence un mouvement par la première saisie, le fait de déterminer si la défaillance de saisie pour l'objet fenêtre s'est produite sur la base d'une comparaison entre un instant de détection de la première saisie et un instant de détection de la seconde saisie.

13. Procédé de la revendication 11 ou 12, dans lequel le fait de déterminer si la défaillance d'entrée s'est produite comprend :
en réponse au cas où une différence de temps entre l'instant de détection de la première saisie et l'instant de détection de la seconde saisie est inférieure à un temps seuil, la détermination de la seconde saisie comme saisie défaillante.

14. Procédé de l'une des revendications 11 à 13, dans lequel le fait de déterminer si la défaillance d'entrée s'est produite comprend :
lorsqu'une différence de temps entre un instant d'occurrence de saisie de la seconde saisie et un instant de début de mouvement de la seconde saisie est inférieure à un premier temps seuil, la définition de l'objet fenêtre en tant que candidat de défaillance ; et
en réponse à un cas où l'objet fenêtre commence un mouvement par la première saisie dans la limite d'un second temps seuil à partir de l'instant de début de mouvement de la seconde saisie, la détermination du fait que la défaillance de saisie s'est produite pour l'objet fenêtre.

15. Support de stockage lisible par ordinateur non transitoire stockant des instructions qui, lorsqu'elles sont exécutées par un processeur, amènent le processeur à réaliser le procédé de l'une des revendications 11 à 14.
